# FASCICULE DE BREVET EUROPEEN

(11) **EP 2 474 752 B1**
(45) Date de publication et mention de la délivrance du brevet: **03.04.2013**
(21) Numéro de dépôt: 12157838.9
(22) Date de dépôt: 29.07.2008
(51) Int. Cl.: F16D 21/06, F16D 13/58

(54) **Agencement pour la fixation d'un dispositif modulaire d'embrayage sur un arbre mené**
Anordnung zur Befestigung einer modulären Kupplungsvorrichtung auf einer Antriebswelle
Arrangement for attaching a modular clutch device to a driven shaft

(30) Priorité: 01.08.2007 FR 0756881
(43) Date de publication de la demande: 11.07.2012
(62) Demande divisionnaire de: 08826909.7
(73) Titulaire: Valeo Embrayages, 80009 Amiens (FR)
(72) Inventeur: Thomire, Sylvain, 80000 Amiens (FR); Lebas, Gilles, 80800 Villers Brettoneux (FR); Thibaut, François, 80330 Longueau (FR); Maingaud, Daniel, 80250 Rouvrel (FR); Dutier, Ivan, 80260 Rainneville (FR)

(56) Documents cités:
- EP-A2- 1 632 687
- DE-A1-102006 022 054
- FR-A1- 2 886 996

## Description

L'invention se rapporte à un agencement pour la fixation d'un dispositif modulaire d'embrayage sur un arbre mené.

L'invention se rapporte plus particulièrement à un agencement pour la fixation d'un dispositif modulaire d'embrayage à friction, notamment pour un véhicule automobile, sur un premier arbre mené, qui comporte :
- un plateau de réaction qui est monté à rotation autour du premier arbre mené par l'intermédiaire d'un palier de roulement, la bague intérieure du palier de roulement étant insérée par coulissement axial vers l'avant sur une portée d'extrémité arrière du premier arbre mené lors d'une opération de montage ;
- au moins un premier disque coaxial avant de friction qui est agencé axialement en avant du plateau de réaction et qui est destiné à être serré contre une face avant du plateau de réaction ;
- un élément de blocage qui, lors d'une opération de fixation, est agencé par déformation élastique dans une position de fixation dans une gorge de fixation associée de la portée du premier arbre mené de manière à limiter le déplacement axial vers l'arrière du palier de roulement.

Les dispositifs d'embrayage de ce type sont généralement conçus de manière à former un module qui est prêt à être monté sur l'arbre mené de transmission d'un véhicule automobile. Le dispositif d'embrayage repose plus particulièrement sur l'arbre mené par un palier de roulement dit de reprise d'effort. Lors du montage, la bague intérieure du palier de roulement est insérée axialement sur une portée associée de l'arbre mené.

Pour empêcher que la bague intérieure du palier de roulement de reprise d'effort ne se démonte en glissant sur la portée, le module est ensuite fixé sur l'arbre mené par un élément de blocage, généralement un anneau élastique, qui bloque les déplacements axiaux du palier de roulement de reprise d'effort vers l'extrémité libre de la portée.

Cependant, la mise en place de l'élément de blocage dans sa position de fixation est généralement peu aisée car l'encombrement du dispositif d'embrayage réduit l'accessibilité à la portée de l'arbre mené ainsi que la visibilité. Ainsi, l'opération de fixation du module de dispositif d'embrayage sur la portée de l'arbre mené est complexe.

Le document DE-A-10.2006.022.054 propose une solution pour résoudre ce problème en réalisant une première opération de prémontage du dispositif d'embrayage au cours de laquelle une première partie avant du dispositif d'embrayage comportant le palier de roulement est montée sur l'arbre mené de manière que la portée de l'arbre soit facilement accessible à un opérateur. Puis le palier de roulement est fixé au moyen d'un élément de blocage au cours d'une deuxième opération de fixation. Enfin, lors d'une troisième opération d'assemblage, une partie arrière du dispositif d'embrayage est assemblée à la première partie avant du dispositif d'embrayage de manière à reconstituer le module du dispositif d'embrayage. La portée de l'arbre mené est alors inaccessible.

Cette solution présente cependant l'inconvénient d'être complexe et onéreuse car il est nécessaire de démonter le module du dispositif d'embrayage en deux parties, puis d'assembler successivement les deux parties sur l'arbre mené.

De plus, les éléments de blocage sont susceptibles d'être égarés lors du transport du module de dispositif d'embrayage, ou ils doivent faire l'objet d'un transport séparé. Ainsi, l'opération de fixation du module de dispositif d'embrayage sur la portée de l'arbre mené est onéreuse.

Pour résoudre notamment ces problèmes, le document EP 1 632 687 A2 propose un agencement du type décrit précédemment, tel que, préalablement à l'opération de fixation, l'élément de blocage occupe une position d'attente dans laquelle il est porté par le dispositif d'embrayage,
- l'élément de blocage est un anneau élastique radialement déformable qui est fixé sur le dispositif d'embrayage de manière à être dans sa position d'attente lorsque le dispositif d'embrayage est monté sur le premier arbre mené, l'opération de fixation succédant à l'opération de montage ;
- le dispositif d'embrayage comporte un deuxième disque coaxial de friction qui est agencé axialement en arrière du plateau de réaction et qui est destiné à être serré contre une face arrière du plateau de réaction, le deuxième disque de friction étant monté sur un deuxième arbre mené qui agencé concentriquement à l'intérieur du premier arbre mené, de manière que le deuxième disque de friction soit axialement en arrière par rapport à la portée de fixation du premier arbre mené.

Pour résoudre les problèmes cités plus haut, l'invention propose un agencement du type précité remarquable en ce que l'anneau élastique est agencé, dans sa position d'attente, sur le deuxième disque de friction coaxialement au premier arbre mené.

Selon d'autres caractéristiques de l'invention, l'agencement étant tel qu'il comporte des moyens pour guider les déplacements de l'anneau élastique depuis sa position d'attente jusqu'à sa position de fixation ;
- l'anneau élastique est agencé sur une face avant du voile radial du deuxième disque de friction ;
- l'anneau élastique est ouvert, les tronçons d'extrémités de l'anneau élastique étant conformés en crochets symétriques qui sont destinés à être reçus, par déformation élastique de l'anneau élastique, dans des orifices excentrés de fixation du voile du deuxième disque de friction de manière qu'en position d'attente de l'anneau élastique, les crochets soient en appui contre la face arrière du voile du deuxième disque de friction pour limiter les déplacements axiaux de l'anneau élastique dans les deux sens par rapport au deuxième disque de friction ;
- les branches d'extrémité des crochets s'étendent circonférentiellement l'une vers l'autre de manière que le passage de la position d'attente vers la position de fixation de l'anneau élastique soit réalisé par un écartement circonférentiel des crochets provoquant l'expansion élastique de l'anneau élastique pour permettre le passage des crochets à travers les orifices associés, puis par coulissement axial vers l'avant en direction de la gorge de fixation, l'interruption de l'écartement des crochets provoquant le rappel élastique de l'anneau élastique vers sa position de fixation ;
- le voile du deuxième disque de friction comporte un ergot axial contre lequel un tronçon de l'anneau élastique est destiné à être en appui radial lorsque l'anneau élastique est dans sa position d'attente ;
- le voile du deuxième disque de friction comporte une pluralité d'ergot qui s'étendent axialement en saillie vers l'avant, les ergots étant agencés de manière que, dans sa position d'attente, l'anneau élastique soit en appui radial simultanément sur une face d'appui chaque ergot et dans un état expansé élastiquement ;
- au moins un ergot comporte une gorge de stockage destinée à immobiliser l'anneau élastique dans sa position d'attente tant qu'un effort axial de transfert orienté vers l'avant n'est pas appliqué à l'anneau élastique ;
- un tronçon d'extrémité avant de la face d'appui de chaque ergot présente la forme d'une rampe qui est inclinée en direction de la gorge de fixation de manière à guider le coulissement axial de l'anneau élastique jusqu'au droit de la gorge de fixation ;
- le deuxième disque de friction comporte un moyeu central, et dans sa position d'attente, l'anneau élastique est immobilisé axialement dans une gorge de stockage qui est réalisée dans une face cylindrique extérieure du moyeu coaxiale au premier arbre mené et de diamètre supérieur ou égale à celui de la portée du premier arbre mené.

D'autres caractéristiques et avantages apparaîtront à la lecture de la description détaillée qui va suivre pour la compréhension de laquelle on se reportera aux dessins annexés parmi lesquels :
- la figure 1 est une vue en demi-coupe axiale d'un agencement pour la fixation d'un dispositif d'embrayage à friction sur un premier arbre mené réalisé selon un premier mode de réalisation ;
- la figure 2 est une vue de face d'un détail de la figure 1 représentant un anneau élastique agencé dans une position d'attente sur le voile d'un disque de friction selon le premier mode de réalisation de l'invention ;
- la figure 3 est une vue en perspective qui représente l'anneau élastique de la figure 1 ;
- la figure 4 est une vue à plus grande échelle en demi-coupe axiale qui représente un agencement du dispositif d'embrayage sur la portée de l'arbre mené réalisé selon un deuxième mode de réalisation de l'invention dans lequel l'anneau élastique en position d'attente est agencé dans une gorge de stockage d'un moyeu du disque de friction ;
- la figure 5 est une vue similaire à celle de la figure 4 dans laquelle l'anneau élastique est dans une position intermédiaire entre sa position d'attente et sa position de fixation ;
- la figure 6 est une vue similaire à celle de la figure 4 dans laquelle l'anneau élastique est dans sa position de fixation ;
- la figure 7 est une vue similaire à celle de la figure 4 qui représente un troisième mode de réalisation de l'invention dans lequel l'anneau élastique en position d'attente est agencé sur le voile du disque de friction ;

Dans la description qui va suivre, des éléments identiques, analogues ou similaires seront désignés par des mêmes numéros de référence.

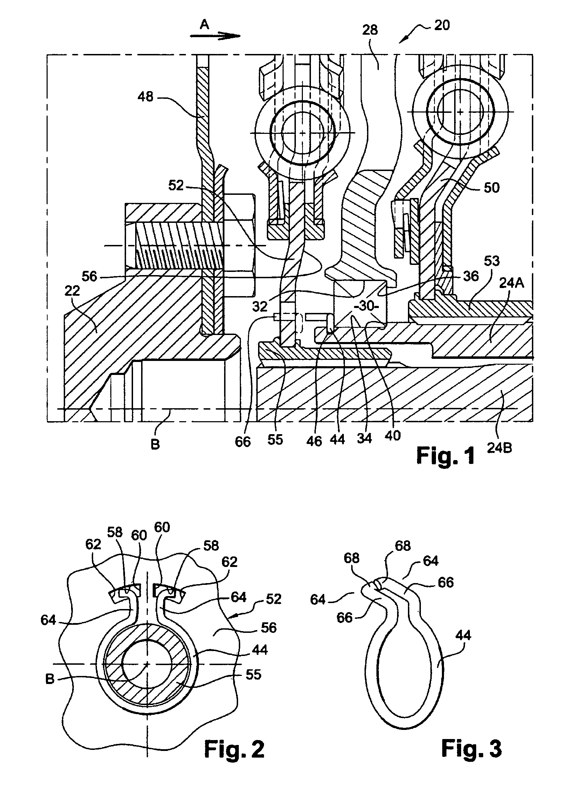

Dans la description qui va suivre, on adoptera à titre non limitatif une direction axiale, suivant l'axe de rotation "B" du dispositif d'embrayage 20, orientée d'arrière en avant comme représenté par la flèche "A" des dessins, ce qui correspond à une orientation de la gauche vers la droite en considérant la figure 1. Des éléments seront qualifiés d'intérieurs ou d'extérieurs en fonction de leur proximité radiale avec l'axe de rotation "B".

A la figure 1, on a représenté schématiquement une portion d'un dispositif d'embrayage 20 à friction, notamment pour véhicule automobile, qui est réalisé conformément aux enseignements de l'invention.

On a représenté ici les éléments appartenant à une moitié supérieure du dispositif d'embrayage 20 car l'embrayage a une forme de révolution autour de son axe de rotation "B".

On a représenté à la figure 1 un dispositif d'embrayage 20 qui est destiné à accoupler temporairement un arbre moteur 22 qui est agencé axialement vers l'arrière et dont une extrémité avant est représentée à gauche à la figure 1, avec au moins un arbre mené 24.

L'arbre moteur 22 est rotatif autour d'un axe de rotation "B" et il est entraîné en rotation par un moteur (non représenté) du véhicule automobile.

Le dispositif d'embrayage 20 représenté à la figure 1 est relié mécaniquement à deux arbres menés 24A, 24B concentriques qui sont montés rotatifs coaxialement à l'arbre moteur 22. Le premier arbre mené 24A forme un tube axial à l'intérieur duquel est agencé le deuxième arbre mené 24B. Une portion d'extrémité arrière libre du deuxième arbre mené 24B dépasse axialement par rapport à l'extrémité arrière du premier arbre mené tubulaire 24A. Chacun des arbres menés 24A, 24B est susceptible de tourner indépendamment de l'autre.

Les arbres menés 24A, 24B sont reliés à une boîte de vitesses (non représentée) agencée axialement en avant du dispositif d'embrayage 20.

Plus particulièrement; le premier arbre mené 24A correspond à certains rapports de vitesses de la boîte de vitesses, par exemple les rapports de vitesses impairs, tandis que le deuxième arbre mené 24B correspond aux autres rapports de vitesses, par exemple les rapports de vitesses pairs.

Le dispositif d'embrayage 20 comporte des premiers moyens d'accouplement temporaire du premier arbre mené 24A avec l'arbre moteur 22.

De manière connue, le dispositif d'embrayage 20 comporte un plateau radial circulaire de réaction 28 qui est monté à rotation autour de l'axe de rotation "B", par l'intermédiaire d'un palier de roulement 30, qui appartient au dispositif d'embrayage 20 selon l'invention. Dans les exemples représentés aux figures, le palier de roulement 30 est formé par un roulement à billes.

Le palier de roulement 30 est ici interposé radialement entre la face cylindrique intérieure 32 d'un orifice central du plateau de réaction 28 et une portée 34 formée par une face cylindrique extérieure d'un tronçon d'extrémité arrière du premier arbre mené tubulaire 24A. La portée d'extrémité arrière 34 comporte ainsi un bord d'extrémité arrière libre.

Une bague extérieure du palier de roulement 30 est emmanchée à force dans la face cylindrique intérieure 32 de l'orifice central du plateau de réaction 28, tandis qu'une bague intérieure du palier de roulement 30 est insérée par coulissement axial sur la portée d'extrémité arrière 34. Ainsi, le palier de roulement 30 appartient au dispositif modulaire d'embrayage 20.

L'opération de montage du dispositif d'embrayage 20 sur la portée 34 sera détaillée par la suite.

La face cylindrique intérieure 32 du plateau de réaction 28 est limitée vers l'avant par une face radiale d'épaulement 36 d'extrémité avant contre laquelle la bague extérieure du palier de roulement 30 est destinée à être appuyée axialement vers l'avant.

La portée d'extrémité arrière 34 du premier arbre mené 24A est aussi limitée vers l'avant par une face radiale d'épaulement 40 d'extrém ité avant.

Un élément de blocage 44 est aussi agencé dans une position de fixation dans laquelle il est agencé dans une gorge annulaire de fixation 46 de la portée 34 du premier arbre mené 24A axialement en arrière du palier de roulement 30. Ainsi le déplacement axial du palier de roulement 30est limité vers l'arrière par l'élément de blocage 44. Dans l'exemple représenté à la figure 1, l'élément de blocage 44 est plus particulièrement formé par un anneau élastique 44 du type jonc ou analogue.

Le plateau de réaction 28 est ainsi fixe axialement par rapport à la portée d'extrémité arrière 34 du premier arbre mené 24A.

Dans cette configuration, la bague intérieure du palier de roulement 30 est solidaire en rotation du premier arbre mené 24A, tandis que la bague extérieure du palier de roulement 30 est solidaire en rotation du plateau de réaction 28.

Par ailleurs, le plateau de réaction 28 est solidaire en rotation de l'arbre moteur 22. A cet effet, le dispositif d'embrayage 20 comporte un disque radial circulaire flexible 48 qui est agencé à une extrémité arrière du dispositif d'embrayage 20 et qui est fixé coaxialement à l'arbre moteur 22. Le disque flexible 48 est relié mécaniquement en rotation à une portion périphérique du plateau de réaction 28 par des moyens de liaison qui ne font pas l'objet de l'invention et qui ne seront donc ni représentés, ni décrits par la suite.

Le dispositif d'embrayage 20 comporte aussi un premier disque coaxial avant de friction 50 qui est agencé axialement en avant du plateau de réaction 28. Le premier disque de friction 50 comporte un voile radial à la périphérie duquel une garniture annulaire de friction (non représentée) est agencée axialement en vis-à-vis d'une face avant de frottement (non représentée) du plateau de réaction 28.

Le premier disque de friction 50 est destiné à être serré contre la face avant du plateau de réaction 28 par un premier plateau de pression (non représenté) pour accoupler temporairement le premier arbre mené 24A avec l'arbre moteur 22. A cet effet, le premier disque de friction 50 est monté solidaire en rotation du premier arbre mené 24A par l'intermédiaire d'un moyeu 53 qui est monté coulissant axialement sur le premier arbre mené 24A tubulaire entre une position arrière serrée contre la face avant du plateau de réaction 28 et une position avant libre dans laquelle le premier disque de friction 50 est éloigné de la face avant du plateau de réaction 28.

Le dispositif d'embrayage 20 comporte aussi des deuxièmes moyens d'accouplement temporaire du deuxième arbre mené 24B avec l'arbre moteur 22.

Les deuxièmes moyens d'accouplement comportent ainsi un deuxième disque coaxial arrière de friction 52 pour l'accouplage temporaire du deuxième arbre mené 24B avec l'arbre moteur 22. Les fonctions du deuxième disque de friction 52 sont analogues à celles du premier disque de friction 50.

Le deuxième disque coaxial arrière de friction 52 est agencé axialement en arrière du plateau de réaction 28. Le deuxième disque de friction 52 comporte ainsi un voile radial à la périphérie duquel une garniture annulaire de friction (non représentée) est agencée axialement en vis-à-vis d'une face arrière de frottement (non représentée) du plateau de réaction 28.

Le deuxième disque de friction 52 est destiné à être serré contre la face arrière du plateau de réaction 28 par un deuxième plateau de pression (non représenté) pour accoupler temporairement le deuxième arbre mené 24B avec l'arbre moteur 22. A cet effet, le deuxième disque de friction 52 est monté solidaire en rotation du deuxième arbre mené 24B par l'intermédiaire d'un moyeu 55 qui est monté coulissant axialement sur le tronçon d'extrémité arrière du deuxième arbre mené 24B tubulaire entre une position avant serrée contre la face arrière du plateau de réaction 28 et une position arrière libre dans laquelle le deuxième disque de friction 52 est éloigné de la face arrière du plateau de réaction 28.

Le voile du deuxième disque de friction 52 est plus particulièrement agencé axialement en vis-à-vis et à proximité du bord d'extrémité arrière libre de la portée 34 du premier arbre mené 24A.

Lorsque le premier disque de friction 50 est dans sa position arrière, il exerce un effort axial de serrage vers l'arrière sur le plateau de réaction 28. Cet effort axial de serrage est transmis au palier de roulement 30. L'anneau élastique 44 de blocage permet de limiter le coulissement axial de la bague intérieure du palier de roulement 30 vers l'arrière de manière que le palier de roulement 30 reste en position montée sur la portée d'extrémité arrière 34 du premier arbre mené 24A.

L'anneau élastique de blocage 44 est ainsi le seul élément de fixation du dispositif modulaire d'embrayage 20 sur le premier arbre mené 24A.

De manière connue, lors de l'opération de montage du dispositif d'embrayage 20 sur le premier arbre mené 24A, le module formé par le dispositif d'embrayage 20 est agencé de manière que la bague intérieure du palier de roulement 30 soit coaxiale à l'axe de rotation "B" et en avant du bord d'extrémité arrière libre de la portée 34. Puis le dispositif d'embrayage 20 est déplacé axialement vers l'avant de manière que la bague intérieure du palier de roulement 30 soit insérée sur la portée 34.

Ensuite, lors d'une opération de fixation, l'anneau élastique 44 de blocage est inséré par déformation élastique dans la gorge de fixation 46 associée de la portée 34 du premier arbre mené 24A de manière à occuper sa position de fixation, comme représenté en traits pleins à la figure 1.

L'invention propose un agencement pour simplifier la fixation du dispositif d'embrayage 20 sur le premier arbre mené 24A, tout en évitant de perdre l'anneau élastique 44 de blocage pendant le transport du dispositif d'embrayage 20 jusqu'à la chaîne de montage.

A cette fin, préalablement à l'opération de fixation, l'anneau élastique 44 de blocage occupe une position d'attente dans laquelle l'anneau élastique 44 est porté par le dispositif d'embrayage 20 et dans laquelle l'anneau élastique 44 est maintenu fixe par rapport au dispositif d'embrayage 20 au moins jusqu'à l'opération de fixation. Ainsi, dans sa position d'attente, l'anneau élastique 44 est solidaire en déplacements du dispositif modulaire d'embrayage 20. En d'autres termes, dans sa position d'attente, l'anneau élastique 44 fait partie du dispositif modulaire d'embrayage 20. Ainsi l'anneau élastique 44 ne peut pas être perdu.

On a représenté aux figures 1 à 3 un premier mode de réalisation de l'invention.

L'élément de blocage est un anneau élastique 44 radialement déformable qui est fixé sur le dispositif d'embrayage 20 de manière à être dans sa position d'attente lorsque le dispositif d'embrayage 20 est monté sur le premier arbre mené 24A, c'est-à-dire lorsque le palier de roulement 30 est inséré sur la portée 34.

L'anneau élastique 44 est susceptible d'être :
- dans un état non contraint vers lequel il est rappelé élastiquement et dans lequel le diamètre intérieur de l'anneau élastique 44 est inférieur ou égal au diamètre extérieur du fond de la gorge de fixation 46 ;
- dans un état expansé dans lequel il est déformé élastiquement radialement vers l'extérieur de manière que son diamètre intérieur soit supérieur à son diamètre dans l'état non contraint ;
- et dans un état rétracté dans lequel il est déformé élastiquement radialement vers l'intérieur de manière que son diamètre soit inférieur à son diamètre dans l'état non contraint.

Dans ce premier mode de réalisation de l'invention, l'anneau élastique 44 est mobile entre sa position arrière d'attente dans laquelle il est agencé sur le deuxième disque de friction 55 coaxialement au premier arbre mené 24A, comme représenté en traits interrompus à la figure 1, et sa position de fixation, comme représenté en traits pleins à la figure 1.

L'anneau élastique 44 est plus particulièrement agencé contre une face avant 56 du voile radial du deuxième disque de friction 52.

A cet effet, comme représenté à la figure 2, le voile du deuxième disque de friction 52 est ajouré de deux orifices de fixation 58 de forme sensiblement rectangulaire qui sont agencés de manière excentrée par rapport à l'axe de rotation "B", au-dessus de l'axe de rotation "B" en se référant à la figure 2. Les deux orifices de fixation 58 sont agencés à proximité l'un de l'autre, de manière symétrique par rapport à une droite radiale.

Chaque orifice de fixation 58 est délimité circonférentiellement par un bord radial proximal 60 par rapport à l'autre orifice de fixation 58, et par un bord radial distal 62 par rapport à l'autre orifice de fixation 58.

L'anneau élastique 44 est ouvert dans sa partie supérieure en se référant aux figures 2 et 3. L'anneau élastique 44 comporte ainsi deux tronçons d'extrémités à proximités d'un de l'autre qui sont conformés en crochets 64 symétriques par rapport à un plan axial.

Chaque crochet 64 a plus particulièrement une forme de "L" dont une branche axiale 66 s'étend axialement vers l'arrière et dont l'autre branche circonférentielle 68 s'étend circonférentiellement en direction de l'autre crochet 64.

Lorsque l'anneau élastique 44 est dans sa position d'attente, la branche circonférentielle 68 de chaque crochet 64 est reçue dans un orifice de fixation 58 associé du voile du deuxième disque de friction 52. Pour ce faire, les crochets 64 sont écartés élastiquement l'un de l'autre par expansion radiale de l'anneau élastique 44.

Ainsi, la branche axiale 66 de chaque crochet 64 traverse le voile à travers l'orifice de fixation 58 associé et vient en appui contre le bord proximal 60 de l'orifice de fixation 58 lorsque l'anneau est rappelé élastiquement vers son état non contraint.

La branche circonférentielle 68 de chaque crochet 64 est alors agencée en arrière et en vis-à-vis de la face arrière du voile du deuxième disque de friction 52 de manière à limiter les déplacements de l'anneau élastique axialement vers l'avant.

Dans la position d'attente, les déplacements de l'anneau élastique 44 sont ainsi limités axialement dans les deux sens par les branches circonférentielles 68 des crochets 64, d'une part, et par le corps annulaire de l'anneau élastique 44, d'autre part. L'anneau élastique 44 est ainsi maintenu dans sa position d'attente.

Dans sa position d'attente, l'anneau élastique 44 entoure le moyeu 55 du deuxième disque de friction 52. Avantageusement, l'anneau élastique 44 est serré élastiquement autour du moyeu 55 de manière à l'immobiliser radialement dans toutes les directions.

Selon une variante non représentée de l'invention, le voile du deuxième disque de friction comporte au moins un ergot qui s'étend en saillie axialement vers l'avant et contre lequel un tronçon de l'anneau élastique, par exemple opposé à l'ouverture, est destiné à être en appui radial vers l'intérieur lorsque l'anneau élastique est dans sa position d'attente de manière à immobiliser radialement l'anneau élastique dans toutes les direction.

Lors de l'opération de fixation du dispositif d'embrayage 20 succédant à l'opération de montage, le passage de la position d'attente vers la position de fixation de l'anneau élastique 44 est réalisé par un écartement circonférentiel des crochets 64 provoquant l'expansion élastique de l'anneau pour permettre le passage des branches circonférentielles 68 des crochets 64 à travers les orifices de fixation 64 associés, puis par coulissement axial vers l'avant en direction de la gorge de fixation 46 de la portée 34. L'anneau élastique 44 est maintenu dans son état expansé de manière à présenter un diamètre intérieur supérieur au diamètre extérieur de la portée 34 du premier arbre mené 24A jusqu'à ce que l'anneau élastique 44 soit engagé sur la portée 34.

L'interruption de l'écartement des crochets provoque le rappel élastique de l'anneau élastique vers son état non contraint de manière à ce qu'il enserre la portée 34. L'anneau est alors poussé axialement jusqu'à attendre la gorge de fixation 46 dans laquelle il pénètre en étant rappelé vers son état non contraint. L'anneau élastique 44 occupe alors sa position de fixation.

Le déplacement de l'anneau élastique 44 est ainsi guidé jusqu'à sa position de fixation par la portée 34.

Selon une variante non représentée de l'invention, la branche circonférentielle 68 de chaque crochet 64 s'étend depuis la branche axiale en s'éloignant de l'autre crochet 64. Ainsi, l'anneau élastique 44 est agencé dans sa position d'attente par rapprochement élastique des crochets 64 l'un de l'autre de manière à permettre le passage des branches circonférentielles 68 vers l'arrière à travers les orifices de fixation 58.

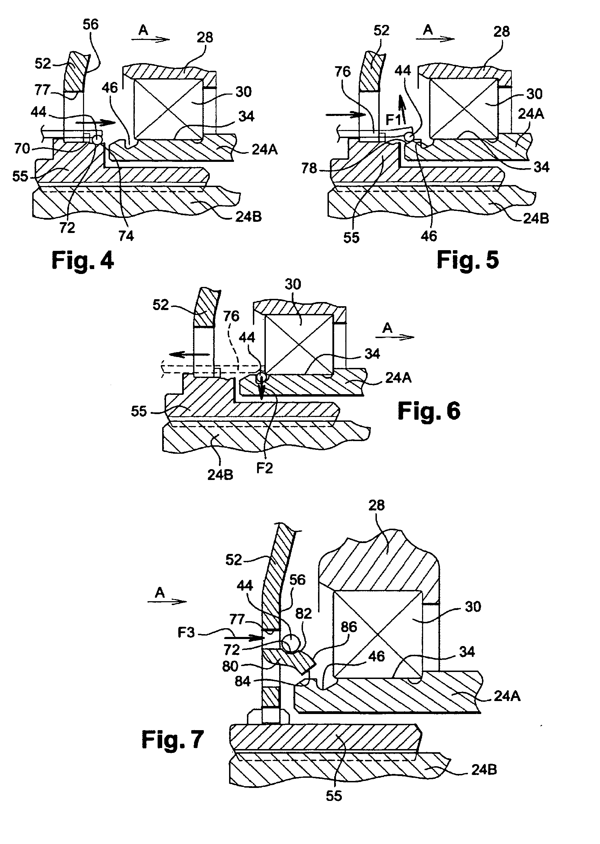

On a représenté aux figures 4 à 6 un deuxième mode de réalisation de l'invention dans lequel l'élément de blocage 44 est un anneau élastique 44 simple, par exemple un jonc conventionnel ou analogue.

Comme représenté à la figure 4, le moyeu 55 du deuxième disque de friction 52 comporte un tronçon d'épaulement qui s'étend axialement vers l'avant depuis le voile et qui est délimité radialement vers l'extérieur par une face cylindrique centrale 70 de diamètre extérieur au moins égal au diamètre extérieur de la portée 34 du premier arbre mené 24A. Le bord d'extrémité avant de la face cylindrique centrale 70 du moyeu 55 est destiné à être agencée axialement en vis-à-vis et à proximité de l'extrémité arrière de la portée 34 du premier arbre mené 24A.

La face cylindrique centrale 70 du moyeu 55 comporte une gorge annulaire de stockage 72 qui est agencée axialement en avant du voile du deuxième disque de friction 52. La gorge de stockage 72 est destinée à recevoir l'anneau élastique 44 dans sa position d'attente.

Ainsi, comme illustré à la figure 4, dans sa position d'attente, l'anneau élastique 44 est serré élastiquement autour de la gorge de stockage 72 de manière à être immobilisé et maintenu dans sa position d'attente par rapport au dispositif d'embrayage 20.

La gorge de stockage 72 de faible profondeur est délimitée vers l'avant par une rampe 74 présentant une pente inclinée vers l'extérieur d'arrière en avant de manière qu'il soit possible de faire passer l'anneau élastique 44 vers son état expansé élastiquement en exerçant un effort axial de transfert vers l'avant, par exemple avec un outil concentrique 76, qui fasse glisser l'anneau élastique 44 vers l'avant.

Afin de faciliter l'accès de l'outil concentrique 76 jusqu'à l'anneau élastique 44, le voile du deuxième disque de friction 52 est ajouré d'au moins une fenêtre de passage 77 qui débouche axialement sur l'anneau élastique 44.

Avantageusement, le bord d'extrémité arrière de la portée 34 du premier arbre mené 24A comporte un chanfrein 78 de manière à faciliter le transfert de l'anneau élastique 44 depuis le moyeu 55 jusqu'à la portée 34.

Lors de l'opération de fixation, l'outil concentrique 76 est introduit axialement d'arrière en avant par la fenêtre de passage 77 de manière à solliciter l'anneau axialement vers l'avant. L'anneau élastique 44 est alors poussé vers l'avant sur la rampe 74 de manière à sortir de la gorge de stockage 72 dans son état expansé élastiquement.

Lorsque l'anneau élastique 44 atteint le bord d'extrémité avant de la face cylindrique centrale 70, comme illustré à la figure 5, l'anneau élastique 44 est poussé de manière à sauter sur le chanfrein 78 d'extrémité arrière de la portée 34 du premier arbre mené 24A.

L'outil concentrique 76 continue à pousser axialement vers l'avant l'anneau élastique 44 qui est guidé par le chanfrein 78 jusqu'à la portée 34. L'anneau élastique 44 est ainsi serré élastiquement autour de la portée 34 dans son état expansé comme représenté par la flèche "F1" de la figure 5.

Lorsque l'anneau élastique 44 atteint la gorge de fixation 46, il est rappelé élastiquement vers son état non contraint de manière à occuper sa position de fixation dans la gorge de fixation 46, comme représenté par la flèche "F2" à la figure 6. L'outil concentrique 76 est alors retiré axialement vers l'arrière.

Le déplacement de l'anneau élastique 44 depuis sa position d'attente jusqu'à sa position de fixation est ainsi guidé successivement par la rampe 74, par le chanfrein 78, puis par la portée 34.

Selon un troisième mode de réalisation qui est représenté à la figure 7, l'élément de blocage 44 est formé par un anneau élastique tel qu'un jonc conventionnel ou analogue, et il est agencé de manière analogue à celle du deuxième mode de réalisation.

Cependant, dans sa position d'attente, l'anneau élastique 44 est ici agencé contre la face avant 56 du voile du deuxième disque de friction 52.

A cet effet, le voile du deuxième disque de friction 52 comporte une pluralité d'ergots 80, par exemple cinq ergots, qui s'étendent axialement en saillie vers l'avant par rapport à la face avant 56 du voile. Chaque ergot 80 comporte une face d'appui 82 tournée vers l'extérieur par rapport à l'axe de rotation "B".

Les ergots sont agencés régulièrement en formant un cercle coaxial à l'axe de rotation "B" de manière que, dans sa position d'attente, l'anneau élastique 44 soit serré radialement simultanément sur les faces d'appui 82 des ergots 80 dans un état expansé élastiquement. Le cercle sur lequel sont disposés les faces d'appui 82 des ergots 80 présente un diamètre supérieur au diamètre de la portée 34 du premier arbre mené 24A.

Chaque ergot 80 comporte une extrémité avant libre 84 qui est agencé radialement au droit d'une face arrière de la gorge de fixation 46.

Un tronçon d'extrémité avant de la face d'appui 82 de chaque ergot 80 présente la forme d'une rampe 86 qui est inclinée radialement vers l'intérieur en direction de la gorge de fixation 46 de manière à guider le coulissement axial vers l'avant de l'anneau élastique 44 jusqu'au droit de la gorge de fixation 46.

Au moins un ergot comporte une gorge de stockage 72 destinée à immobiliser et à maintenir axialement l'anneau élastique 44 dans sa position d'attente tant qu'un effort axial de transfert orienté vers l'avant n'est pas appliqué à l'anneau élastique comme indiqué par la flèche "F3" de la figure 7.

Selon une variante non représentée de l'invention, la gorge de stockage 72 est formée par un tronçon d'extrémité arrière de la face d'appui d'au moins un ergot qui est incliné vers l'intérieur d'avant en arrière de manière que l'anneau élastique 44 rappelé élastiquement vers son état non contraint appuie radialement vers l'intérieur sur le tronçon arrière de l'ergot 80, ce qui provoque son glissement vers l'arrière jusqu'à être en appui contre la face avant 56 du voile du deuxième disque de friction 52.

Les ergots 80 sont par exemple réalisés par découpage puis pliage de languettes radiales réalisées dans le voile du deuxième disque de friction 52 comme illustré par la figure 7.

Lors de l'opération de fixation succédant à l'opération de montage du dispositif d'embrayage sur le premier arbre mené 24A, un effort axial de transfert "F3" vers l'avant est appliqué à l'anneau élastique 44, par exemple par un outil (non représenté) inséré axialement vers l'avant à travers une fenêtre 77 de passage, de manière que l'anneau élastique 44 coulisse axialement vers l'avant en direction de la rampe 86 d'extrémité avant de chaque ergot 80.

Sous l'effet du rappel élastique de l'anneau élastique 44 vers son état non contraint, l'anneau appui radialement vers l'intérieur sur les rampes 86, ce qui provoque son glissement vers l'avant jusqu'à la gorge de fixation 46 dans sa position de fixation.

Le déplacement de l'anneau élastique 44 depuis sa position d'attente jusqu'à sa position de fixation est ainsi guidé par la rampe 86.

Les modes de réalisation de l'invention proposent ainsi un dispositif d'embrayage 20 équipé d'un anneau élastique 44 radialement déformable qui est fixé sur le dispositif d'embrayage 20 de manière à être dans sa position d'attente lorsque le dispositif d'embrayage 20 est monté sur le premier arbre mené 24A. Ainsi l'anneau élastique 44 ne risque pas d'être égaré lors du transport du dispositif d'embrayage 20 jusqu'à la chaîne de montage du véhicule automobile.

L'anneau élastique 44 est en outre agencé de manière à ce que l'opération de fixation puisse être réalisée avec une économie de mouvement et sans qu'une grande visibilité soit nécessaire à un opérateur.

## Revendications

1. Agencement pour la fixation d'un dispositif modulaire d'embrayage (20) à friction, notamment pour un véhicule automobile, sur un premier arbre mené (24), qui comporte :
- un plateau de réaction (28) qui est monté à rotation autour du premier arbre mené (24A) par l'intermédiaire d'un palier de roulement (30), la bague intérieure du palier de roulement (30) étant insérée par coulissement axial vers l'avant sur une portée (34) d'extrémité arrière du premier arbre mené (24A) lors d'une opération de montage ;
- un premier disque coaxial avant de friction (50) qui est agencé axialement en avant du plateau de réaction (28) et qui est destiné à être serré contre une face avant du plateau de réaction (28) ; et un deuxième disque coaxial de friction (52) qui est agencé axialement en arrière du plateau de réaction (28) et qui est destiné à être serré contre une face arrière du plateau de réaction (28), le deuxième disque de friction (52) étant monté sur un deuxième arbre mené (24B) qui est agencé concentriquement à l'intérieur du premier arbre mené (24A) de manière que le deuxième disque de friction soit axialement en arrière par rapport à la portée de fixation du premier arbre mené (24A)
- un élément de blocage (44) qui, lors d'une opération de fixation, est agencé par déformation élastique dans une position de fixation dans une gorge de fixation (46) associée de la portée (34) du premier arbre mené (24A) de manière à limiter le déplacement axial vers l'arrière du palier de roulement (30) ;
l'agencement étant tel que, préalablement à l'opération de fixation, l'élément de blocage (44) occupe une position d'attente dans laquelle il est porté par le dispositif d'embrayage (20),
que l'élément de blocage (44) est un anneau élastique radialement déformable qui est fixé sur le dispositif d'embrayage (20) de manière à être dans sa position d'attente lorsque le dispositif d'embrayage (20) est monté sur le premier arbre, l'agencement étant **caractérisé en ce que** l'anneau élastique est agencé, dans sa position d'attente, sur le deuxième disque de friction (52) coaxialement au premier arbre mené.

2. Agencement selon la revendication précédente, **caractérisé en ce qu'**il comporte des moyens (34, 70, 78, 82) pour guider les déplacements de l'anneau élastique (44) depuis sa position d'attente jusqu'à sa position de fixation.

3. Agencement selon la revendication précédente, **caractérisé en ce que** l'anneau élastique (44) est agencé sur une face avant (56) du voile radial du deuxième disque de friction (52).

4. Agencement selon la revendication précédente, **caractérisé en ce que** l'anneau élastique (44) est ouvert, les tronçons d'extrémités de l'anneau élastique (44) étant conformés en crochets symétriques (64) qui sont destinés à être reçus, par déformation élastique de l'anneau élastique (44), dans des orifices excentrés de fixation (58) du voile du deuxième disque de friction (52) de manière qu'en position d'attente de l'anneau élastique (44), les crochets (64) soient en appui contre la face arrière du voile du deuxième disque de friction (52) pour limiter les déplacements axiaux de l'anneau élastique (44) dans les deux sens par rapport au deuxième disque de friction (52).

5. Agencement selon la revendication précédente, **caractérisé en ce que** les branches d'extrémité (68) des crochets (64) s'étendent circonférentiellement l'une vers l'autre de manière que le passage de la position d'attente vers la position de fixation de l'anneau élastique (44) soit réalisé par un écartement circonférentiel des crochets (64) provoquant l'expansion élastique de l'anneau élastique (44) pour permettre le passage des crochets (64) à travers les orifices associés (58), puis par coulissement axial vers l'avant en direction de la gorge de fixation (46), l'interruption de l'écartement des crochets (64) provoquant le rappel élastique de l'anneau élastique (44) vers sa position de fixation.

6. Agencement selon l'une quelconque des revendications 4 ou 5, **caractérisé en ce que** le voile du deuxième disque de friction (52) comporte un ergot axial contre lequel un tronçon de l'anneau élastique (44) est destiné à être en appui radial lorsque l'anneau élastique (44) est dans sa position d'attente.

7. Agencement selon la revendication 3, **caractérisé en ce que** le voile du deuxième disque de friction (52) comporte une pluralité d'ergot (80) qui s'étendent axialement en saillie vers l'avant, les ergots (80) étant agencés de manière que, dans sa position d'attente, l'anneau élastique (44) soit en appui radial simultanément sur une face d'appui (82) chaque ergot (80) et dans un état expansé élastiquement.

8. Agencement selon la revendication précédente, **caractérisé en ce qu'**au moins un ergot (80) comporte une gorge de stockage (72) destinée à immobiliser l'anneau élastique (44) dans sa position d'attente tant qu'un effort axial de transfert orienté vers l'avant n'est pas appliqué à l'anneau élastique (44).

9. Agencement selon l'une quelconque des revendications 7 ou 8, **caractérisé en ce qu'**un tronçon d'extrémité avant de la face d'appui (82) de chaque ergot (80) présentent la forme d'une rampe (86) qui est inclinée en direction de la gorge de fixation (46) de manière à guider le coulissement axial de l'anneau élastique (44) jusqu'au droit de la gorge de fixation (44).

10. Agencement selon la revendication 1 ou 2, **caractérisé en ce que** le deuxième disque de friction (52) comporte un moyeu central (55), et **en ce que**, dans sa position d'attente, l'anneau élastique (44) est immobilisé axialement dans une gorge de stockage (72) qui est réalisée dans une face cylindrique extérieure (70) du moyeu (55) coaxiale au premier arbre mené (24A).

## Claims

1. Arrangement for securing of a modular friction clutch device (20), in particular for a motor vehicle, on a first driven shaft (24), which comprises:
- a reaction plate (28) which is fitted such as to rotate around the first driven shaft (24A) by means of a roller bearing (30), the inner ring of the roller bearing (30) being inserted by axial sliding forwards on a rear end support surface (34) of the first driven shaft (24A) during an assembly operation:
- a first front coaxial friction disc (50) which is arranged axially to the front of the reaction plate (28), and is designed to be clamped against a front surface of the reaction plate (28); and a second coaxial friction disc (52) which is arranged axially to the rear of the reaction plate (28), and is designed to be clamped against a rear surface of the reaction plate (28), the second friction disc (52) being assembled on a second driven shaft (24B) which is arranged concentrically in the interior of the first driven shaft (24A), such that the second friction disc is axially to the rear relative to the support surface for securing of the first driven shaft (24A);
- a blocking element (44) which, during a securing operation, is arranged by resilient deformation in a securing position in an associated securing groove (46) of the support surface (34) of the first driven shaft (24A), such as to limit the axial displacement rearwards of the roller bearing (30);
the arrangement being such that, before the securing operation, the blocking element (44) occupies a ready position in which it is supported by the clutch device (20),
the blocking element (44) is a radially deformable resilient ring which is secured to the clutch device (20) such as to be in its ready position when the clutch device (20) is assembled on the first shaft,
the arrangement being **characterised in that**, in its ready position, the resilient ring is arranged on the second friction disc (52) coaxially to the first driven shaft.

2. Arrangement according to the preceding claim, **characterised in that** it comprises means (34, 70, 78, 82) for guiding the displacements of the resilient ring (44) from its ready position to its securing position.

3. Arrangement according to the preceding claim, **characterised in that** the resilient ring (44) is arranged on a front surface (56) of the radial body of the second friction disc (52).

4. Arrangement according to the preceding claim, **characterised in that** the resilient ring (44) is open, the end sections of the resilient ring (44) being in the form of symmetrical hooks (64) which are designed to be received, by resilient deformation of the resilient ring (44), in eccentric securing apertures (58) in the body of the second friction disc (52), such that in the ready position of the resilient ring (44) the hooks (64) are supported against the rear surface of the body of the second friction disc (52) in order to limit the axial displacements of the resilient ring (44) in both directions relative to the second friction disc (52).

5. Arrangement according to the preceding claim, **characterised in that** the end branches (68) of the hooks (64) extend circumferentially towards one another such that the passage from the ready position towards the securing position of the resilient ring (44) is carried out by circumferential spacing of the hooks (64), thus giving rise to the resilient expansion of the resilient ring (44) in order to permit the passage of the hooks (64) through the associated apertures (58), then, by axial sliding forwards in the direction of the securing groove (46), to permit the interruption of the spacing of the hooks (64), thus giving rise to the resilient return of the resilient ring (44) towards its securing position.

6. Arrangement according to either of claims 4 or 5, **characterised in that** the body of the second friction disc (52) comprises an axial pin against which a section of the resilient ring (44) is designed to be supported radially when the resilient ring (44) is in its ready position.

7. Arrangement according to claim 3, **characterised in that** the body of the second friction disc (52) comprises a plurality of pins (80) which project axially forwards, the pins (80) being arranged such that, in its ready position, the resilient ring (44) is supported radially simultaneously on a support surface (82) each pin (80) and in a resiliently expanded state.

8. Arrangement according to the preceding claim, **characterised in that** at least one pin (80) comprises a storage groove (72) which is designed to immobilise the resilient ring (44) in its ready position until an axial transfer force which is oriented forwards is applied to the resilient ring (44).

9. Arrangement according to either of claims 7 or 8, **characterised in that** a front end section of the support surface (82) of each pin (80) has the form of a ramp (86) which is inclined in the direction of the securing groove (46), such as to guide the axial sliding of the resilient ring (44) as far as at right-angles to the securing groove (44).

10. Arrangement according to claim 1 or 2, **characterised in that** the second friction disc (52) comprises a central hub (55), and **in that**, in its ready position, the resilient ring (44) is immobilised axially in a storage groove (72) provided in an outer cylindrical surface (70) of the hub (55), which surface is coaxial to the first driven shaft (24A).

## Patentansprüche

1. Anordnung zur Befestigung einer modularen Reibungskupplungsvorrichtung (20), insbesondere für ein Kraftfahrzeug, an einer ersten Abtriebswelle (24A), umfassend:
- eine Reaktionsplatte (28), die unter Vermittlung eines Wälzlagers (30) drehbar um die erste Abtriebswelle (24A) montiert ist, wobei der innere Ring des Wälzlagers (30) bei einem Montagevorgang durch axiales Schieben nach vorne auf eine Auflagefläche (34) des hinteren Endes der ersten Abtriebswelle (24A) eingefügt ist;
- eine erste koaxiale vordere Reibungsscheibe (50), die axial vor der Reaktionsplatte (28) angeordnet ist und die dazu bestimmt ist, gegen eine vordere Fläche der Reaktionsplatte (28) gespannt zu werden; und eine zweite koaxiale Reibungsscheibe (52), die axial hinter der Reaktionsplatte (28) angeordnet ist und die dazu bestimmt ist, gegen eine hintere Fläche der Reaktionsplatte (28) gespannt zu werden, wobei die zweite Reibungsscheibe (52) auf einer zweiten Abtriebswelle (24B) montiert ist, welche konzentrisch im Inneren der ersten Abtriebswelle (24A) in der Art angeordnet ist, dass die zweite Reibungsscheibe mit Bezug auf die Auflagefläche zur Befestigung der ersten Abtriebswelle (24A) axial hinten ist;
- ein Blockierungselement (44), welches bei einem Befestigungsvorgang durch elastische Verformung in eine Befestigungsposition in eine der Auflagefläche (34) der ersten Abtriebswelle (24A) zugeordnete Befestigungs-Hohlkehle (46) angeordnet ist, um die axiale Verschiebung des Wälzlagers (30) nach hinten zu begrenzen;
wobei die Anordnung derart ist, dass das Blockierungselement (44) vor dem Befestigungsvorgang eine Warteposition einnimmt, in der es von der Kupplungsvorrichtung (20) getragen wird,
und dass das Blockierungselement (44) ein radial verformbarer elastischer Ring ist, der an der Kupplungsvorrichtung (20) befestigt ist, um in seiner Warteposition zu sein, wenn die Kupplungsvorrichtung (20) an der ersten Welle montiert wird,
wobei die Anordnung **dadurch gekennzeichnet ist, dass** der elastische Ring in seiner Warteposition auf der zweiten Reibungsscheibe (52) koaxial zur ersten Abtriebswelle angeordnet ist.

2. Anordnung nach dem vorherigen Anspruch, **dadurch gekennzeichnet, dass** sie Mittel (34, 70, 78, 82) zum Führen der Verlagerungen des elastischen Rings (44) von seiner Warteposition bis zu seiner Befestigungsposition aufweist.

3. Anordnung nach dem vorherigen Anspruch, **dadurch gekennzeichnet, dass** der elastische Ring (44) auf einer vorderen Fläche (56) des radialen Flanschs der zweiten Reibungsscheibe angeordnet ist.

4. Anordnung nach dem vorherigen Anspruch, **dadurch gekennzeichnet, dass** der elastische Ring (44) offen ist, wobei die Endabschnitte des elastischen Rings (44) als symmetrische Haken (64) ausgebildet sind, die dazu bestimmt sind, durch elastische Verformung des elastischen Rings (44) in exzentrischen Befestigungsöffnungen (58) des Flanschs der zweiten Reibungsscheibe (52) in der Art aufgenommen zu werden, dass in der Warteposition des elastischen Rings (44) die Haken (64) in Anlage gegen die hintere Fläche des Flanschs der zweiten Reibungsscheibe (52) kommen, um die axialen Verlagerungen des elastischen Rings (44) relativ zu der zweiten Reibungsscheibe (52) in beiden Richtungen zu begrenzen.

5. Anordnung nach dem vorherigen Anspruch, **dadurch gekennzeichnet, dass** die Endbereiche (68) der Haken (64) sich in Umfangsrichtung derart aufeinander zu erstrecken, dass der Übergang des elastischen Rings (44) von der Warteposition in die Befestigungsposition durch ein umfangsmäßiges Auseinanderdrücken der Haken (64) realisiert wird, welche die die elastische Expansion des elastischen Rings (44) herbeiführt, um den Übergang der Haken (64) durch die zugeordneten Öffnungen (58) hindurch zu erlauben, wobei dann durch axiales Verschieben nach vorne in Richtung zu der Befestigungs-Hohlkehle (46) der Abbruch des Auseinanderdrückens der Haken (64) das elastische Zurückstellen des elastischen Rings (44) in seine Befestigungsposition herbeiführt.

6. Anordnung nach einem der Ansprüche 4 oder 5, **dadurch gekennzeichnet, dass** der Flansch der zweiten Reibungsscheibe (52) einen axialen Vorsprung aufweist, wobei ein Abschnitt des elastischen Rings (44) dazu bestimmt ist, radial gegen diesen anzuliegen, wenn der elastische Ring (44) in seiner Warteposition ist.

7. Anordnung nach Anspruch 3, **dadurch gekennzeichnet, dass** der Flansch der zweiten Reibungsscheibe (52) eine Vielzahl von Vorsprüngen (80) aufweist, die sich als Auskragung axial nach vorne erstrecken, wobei die Vorsprünge (80) in der Art angeordnet sind, dass der elastische Ring (44) in seiner Warteposition gleichzeitig in radialer Anlage an einer Auflagefläche (82) von jedem Vorsprung (80) und in einem elastisch erweiterten Zustand ist.

8. Anordnung nach dem vorherigen Anspruch, **dadurch gekennzeichnet, dass** mindestens ein Vorsprung (80) eine Lagerungs-Hohlkehle (72) aufweist, die dazu bestimmt ist, den elastischen Ring (44) in seiner Warteposition solange festzusetzen, bis eine nach vorne gerichtete axiale Verlagerungskraft auf den elastischen Ring (44) angewendet wird.

9. Anordnung nach einem der Ansprüche 7 oder 8, **dadurch gekennzeichnet, dass** ein vorderer Endabschnitt der Auflagefläche (82) von jedem Vorsprung (80) die Form einer Rampe (86) aufweist, die in Richtung der Befestigungs-Hohlkehle (46) geneigt ist, um die axiale Verschiebung des elastischen Rings (44) bis über die Befestigungs-Hohlkehle (46) zu führen.

10. Anordnung nach Anspruch 1 oder 2, **dadurch gekennzeichnet, dass** die zweite Reibungsscheibe (52) eine zentrale Nabe (55) umfasst, und dadurch, dass der elastische Ring (44) in seiner Warteposition axial festgesetzt ist in einer Lagerungs-Hohlkehle (72), die in einer zylindrischen, zur ersten Abtriebswelle (24A) koaxialen äußeren Fläche (70) der Nabe (55) ausgeführt ist.
